# EUROPÄISCHE PATENTSCHRIFT

(11) **EP 1 453 707 B1**
(45) Veröffentlichungstag und Bekanntmachung des Hinweises auf die Patenterteilung: **12.09.2007**
(21) Anmeldenummer: 02754280.2
(22) Anmeldetag: 28.06.2002
(51) Int. Cl.: B60S 1/08

(54) **SCHEIBENWISCHERANTRIEB SOWIE SCHEIBENWISCHERVORRICHTUNG MIT EINEM SCHEIBENWISCHERANTRIEB**
WINDSCREEN WIPER DRIVE AND WINDSCREEN WIPER ARRANGEMENT WITH A WINDSCREEN WIPER DRIVE
ENTRAINEMENT D'ESSUIE-GLACE ET DISPOSITIF D'ESSUIE-GLACE COMPORTANT UN ENTRAINEMENT D'ESSUIE-GLACE

(30) Priorität: 04.12.2001 DE 10159446
(43) Veröffentlichungstag der Anmeldung: 08.09.2004
(73) Patentinhaber: ROBERT BOSCH GMBH, 70442 Stuttgart (DE)
(72) Erfinder: NEUBAUER, Achim, 76547 Sinzheim-Vormberg (DE); BOLZ, Martin-Peter, 77815 Buehl (DE); PAWELETZ, Anton, 70736 Fellbach (DE); MOENCH, Jochen, 76547 Sinzheim (DE); KRUEGER, Hartmut, 77830 Buehlertal (DE)
(86) Internationale Anmeldenummer: PCT/DE2002/002360
(87) Internationale Veröffentlichungsnummer: WO 2003/047927

(56) Entgegenhaltungen:
- EP-A- 0 410 784
- US-A- 4 866 357
- US-A- 5 495 132

## Beschreibung

Die Erfindung betrifft einen Scheibenwischerantrieb gemäß dem Oberbegriff des Anspruches 1 sowie eine Scheibenwischervorrichtung mit einem Scheibenwischerantrieb gemäß Anspruch 8.

Bekannte Scheibenwischervorrichtungen werden durch einen GleichstromMotor angetrieben, dessen Rotationsbewegung durch ein Getriebe und ein Gestänge auf z.B. zwei Wischerkörper übertragen wird. Dieses Gestänge benötigt wertvollen Bauraum eines mit der Scheibenwischervorrichtung ausgerüsteten Kraftfahrzeugs. Für einen direkten Antrieb eines Wischerkörpers mit einem Elektrokleinmotor reicht dessen Drehmoment nicht aus, so daß ein aufwendiges Getriebe zwischengeschaltet werden muß. Ein weiteres Problem, das sich beim direkten Antrieb eines Wischerkörpers mit einem Elektrokleinmotor stellt, ist, daß ein derartiger Antrieb eine Reversierfähigkeit des Elektrokleinmotors voraussetzt. Diese Anforderungen führen zu Auslegungen von Elektrokleinmotoren, die aufgrund ihrer baulichen Dimensionen nicht tolerabel sind.

Eine Scheibenwischervorrichtung mit einem gattungsgemäßen Scheibenwischerantrieb ist bekannt aus der US 4 866 357.

Es ist eine erste Aufgabe der vorliegenden Erfindung, einen Scheibenwischerantrieb der eingangs genannten Art derart weiterzubilden, daß er die an ihn gestellten Drehmomentanforderungen sicher bewältigt und dabei bauklein ausgeführt werden kann.

Diese Aufgabe ist erfindungsgemäß gelöst durch einen Scheibenwischerantrieb mit den Merkmalen des Anspruches 1.

Erfindungsgemäß wurde erkannt, daß ein Reluktanzmotor eine für einen Scheibenwischerantrieb prinzipiell geeignete Drehmomentcharakteristik, d. h. ein hohes mögliches Anfahrmoment zur Überwindung einer Haftreibung des Wischerkörpers, aufweist.

Der Einsatz eines Reluktanzmotors als Teil eines Scheibenwischerantriebs führt daher zur Möglichkeit eines kleinen, kostengünstigen und reversierfähigen Scheibenwischerantrieb mit ausreichendem Drehmoment. Der Einsatz eines Getriebes ist bei einem derartigen Scheibenwischerantrieb nicht zwingend.

Zudem besteht bei einem Reluktanzmotor nicht die Gefahr einer Entmagnetisierung von Motorbauteilen, da ein Reluktanzmotor ohne Permanentmagnet auskommt.

Ein Scheibenwischerantrieb mit einer Ansteuereinrichtung, durch welche der Stator abhängig von der Drehmomentaufnahme durch den Wischerkörper mit einem variablen Strom versorgt wird, schafft die Möglichkeit der Erhöhung des Anfahrmoments des Reluktanzmotors, was insbesondere dann erforderlich ist, wenn die Haftreibung des Wischerkörpers an der Scheibe überwunden werden muß. Die Erhöhung des Anfahrmoments über den variablen Strom kann diskontinuierlich durch Vorgabe eines abgestuften Stroms oder auch kontinuierlich erfolgen. Vorzugsweise ist die Ansteuereinrichtung derart ausgelegt, daß die Stromversorgung an Umgebungsparameter, z. B. die Außentemperatur, die Temperatur von Komponenten des oder der Wischerkörper oder die Anzahl der Versuche zur Überwindung der Haftreibung bei einem fester an der Scheibe anhaftendem Wischerkörper, angepaßt wird. Die Ansteuereinrichtung muß nicht direkt beim Reluktanzmotor angeordnet sein, sondern kann ggf. von diesem entfernt verbaut werden.

Mit einer Ansteuereinrichtung, die als Strombegrenzer ausgeführt ist, wobei der Strombegrenzer so begrenzt wird, dass das Zeitintegral des quadriertem Statorstroms über einen vorgegebenen Zeitraum kleiner ist als ein vorgegebener Strom-Grenzwert, läßt sich eine thermische Überlast des Scheibenwischerantriebs effizient vermeiden. Erfindungsgemäß wurde hierbei erkannt, daß beim Anfahren eines Reluktanzmotors über die Variation des Anfahrstroms eine der Charakteristik eines Reihenschlußmotors vergleichbare Motorencharakteristik erzielt werden kann.

Ein als Hohlwelle ausgeführter Rotor des Reluktanzmotors gemäß Anspruch 2 führt zur Möglichkeit einer direkten Ankupplung an ein mechanisches Verbindungselement, welches z. B. in den Rotor drehschlüssig eingesteckt wird. Der resultierende Scheibenwischerantrieb kann sehr bauklein ausgeführt werden. Wird ein Getriebe eingesetzt, müssen zwar bei der Baugröße gewisse Abstriche gemacht werden, es ergibt sich aber eine Verbesserung der Kraftübertragung des Reluktanzmotors, so daß dieser ggf. baukleiner ausgeführt werden kann, wodurch insgesamt eine bauliche Verkleinerung gegenüber einem erfindungsgemäßen Scheibenwischerantrieb ohne Getriebe erreicht werden kann. Die hierbei vorzugsweise eingesetzte Untersetzung zwischen 10 und 20 hat sich als in dieser Hinsicht guter Kompromiß dargestellt.

Eine Ansteuereinrichtung gemäß Anspruch 3 kann gerade hinsichtlich wechselnder Erfordernisse an Scheibenwischerantriebe bei verschiedenen Kraftfahrzeugtypen oder hinsichtlich unterschiedlicher Einsatzbedingungen sehr variabel ausgelegt werden.

Mit Hilfe eines Lagesensors gemäß Anspruch 4 läßt sich der Rotor in eine definierte Ruheposition fahren, in der er ein hohes Anfahrmoment liefern kann. Eine derartige Ruheposition kann prinzipiell auch mit Hilfe eines geeigneten Anschlags, der die Bewegung z. B. des mechanischen Verbindungselements begrenzt, erreicht werden, wenn auf einen Lagesensor verzichtet werden soll.

Mit einer Ausführung des Lagesensors gemäß Anspruch 5, bei der der Lagesensor in dem als Hohlwelle ausgeführten Rotor angeordnet ist, läßt sich eine sehr genaue Drehpositionsbestimmung des Rotors realisieren.

Eine Polanordnung des Reluktanzmotors gemäß Anspruch 6 führt zur Möglichkeit, ein hohes Anfahrmoment des Reluktanzmotors zu erreichen sowie eine typische, bei sogenannten SR-Motoren gegebene Drehmomentwelligkeit auszunutzen.

Eine Ausführung von Rotor und Stator gemäß Anspruch 7 führt zu einem Reluktanzmotor, der nur ein geringes Volumen beansprucht.

Eine weitere Aufgabe der Erfindung ist es, eine Scheibenwischervorrichtung mit einem Scheibenwischerantrieb anzugeben, der gleichzeitig bauklein ist und die Drehmomentanforderungen der Scheibenwischervorrichtung erfüllt.

Diese Aufgabe ist erfindungsgemäß gelöst durch eine Scheibenwischervorrichtung gemäß Anspruch 8. Die Vorteile der Scheibenwischervorrichtung ergeben sich aus den Vorteilen des Scheibenwischerantriebs.

Ein Ausführungsbeispiel der Erfindung wird nachfolgend anhand der Zeichnung näher erläutert. In dieser zeigen:
- Fig. 1: schematisch eine Scheibenwischervorrichtung eines Kraftfahrzeugs mit zugehörigem Scheibenwischerantrieb;
- Fig. 2: ein Diagramm, welches insbesondere den Drehmomentverlauf an einer Abtriebswelle eines Wischerkörpers über einen Betriebszyklus der Scheibenwischervorrichtung wiedergibt;
- Fig. 3: einen Reluktanzmotor als Teil des Scheibenwischerantriebs der Scheibenwischervorrichtung von Figur 1;
- Fig. 4: ein Drehmoment-Kennlinien-Diagramm;
- Fig. 5: ein Diagramm, welches den zeitlichen Verlauf der Drehzahl und des Drehmoments eines Switch-Reluktanzmotors im Reversierbetrieb des Scheibenwischers wiedergibt;
- Fig. 6: ein Diagramm, welches des Drehmomentverlauf eines Reluktanzmotors im stationären Betrieb sowie beim Anfahren und beim Abschalten wiedergibt; und
- Fig. 7: ein zu Figur 6 ähnliches Diagramm, welches den Drehmomentverlauf eines Reluktanzmotors im Zuge einer Beschleunigung mit einer Strombegrenzung sowie das Last-Drehmoment an der Abtriebswelle des Wischerkörpers wiedergibt.

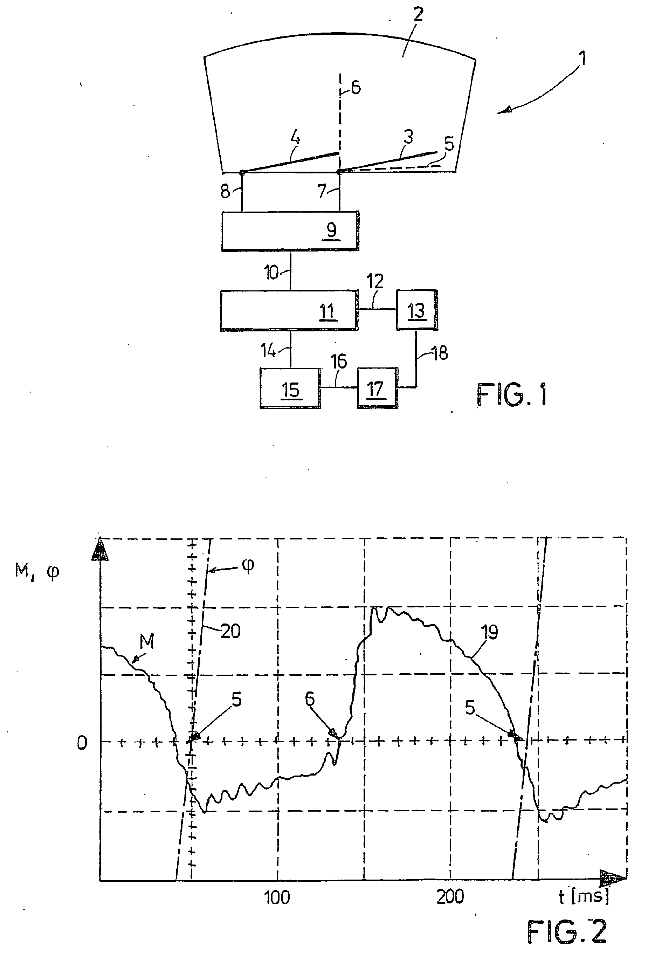

Figur 1 zeigt schematisch Hauptkomponenten einer insgesamt mit dem Bezugszeichen 1 bezeichneten Scheibenwischervorrichtung. Eine Scheibe 2, z. B. die Frontscheibe eines Kraftfahrzeugs, wird mit Hilfe zweier über diese gleitenden Wischerkörper 3, 4, wie sie aus dem Stand der Technik bekannt sind, z. B. von anhaftenden Regentropfen gereinigt. Vom in Figur 1 rechten Wischerkörper 3 sind eine Ruhelage 5 sowie eine obere Umkehrlage 6 gestrichelt angedeutet.

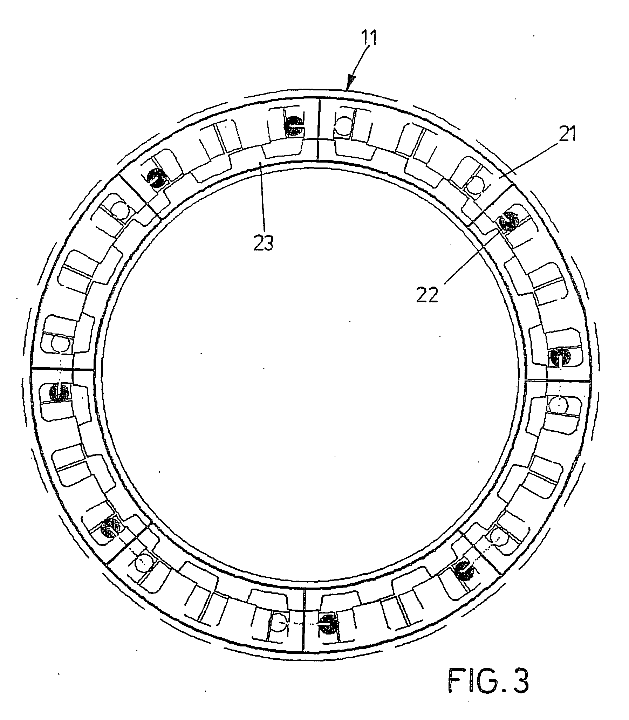

Über schematisch dargestellte Abtriebswellen 7, 8 und ein Getriebe 9 sowie ein weiteres schematisch dargestelltes mechanisches Verbindungselement 10 stehen die Abtriebswellen 7, 8 mit einem Rotor 23 (vgl. Fig. 3) eines Reluktanzmotors 11, der noch näher beschrieben wird, in Wirkverbindung. Das Getriebe 9 ist untersetzend ausgelegt und hat je nach Fahrzeugtyp und Anwendungsfall eine Untersetzung von typischerweise 10 bis 20.

Alternativ zur in Figur 1 dargestellten Anordnung, in der beiden Wischerkörpem 3, 4 ein Getriebe 9 sowie ein Reluktanzmotor 11 zugeordnet ist, kann alternativ eine Anordnung vorgesehen sein, in der jeder Wischerkörper 3, 4 ein eigenes Getriebe aufweist, welches über jeweils ein mechanisches Verbindungselement mit jeweils einem Reluktanzmotor verbunden ist.

Über eine Signalleitung 12 erfaßt ein Positionssensor 13 die aktuelle Drehposition des Rotors 23 des Reluktanzmotors 11 in dessen Stator 21 (vgl. Fig. 3).

Über eine elektrische Versorgungsleitung 14 steht der Stator 21 des Reluktanzmotors 1 mit einer Stromquelle 15, z. B. der Batterie des Kraftfahrzeugs, in Verbindung. Die Stromquelle 15 steht ihrerseits über eine Steuerleitung 16 mit einer Ansteuereinrichtung 17 in Verbindung. Über eine Datenleitung 18 ist die Ansteuereinrichtung 17 mit dem Positionssensor 13 verbunden.

Die beim Betrieb der Scheibenwischervorrichtung 1 auftretenden Drehmomentverhältnisse an den Abtriebswellen 7, 8 der Wischerkörper 3, 4 verdeutlicht das M/t-Diagramm der Figur 2. Nachfolgend werden die Eigenschaften des Scheibenwischerantriebs dann, wenn nichts anderes angegeben ist, nur im Zusammenhang mit dem Wischerkörper 3 beschrieben. Die Ausführungen gelten entsprechend auch für den Antrieb des Wischerkörpers 4.

Als durchgezogene, in grober Näherung sinusförmige Linie ist in Fig. 2 das Abtriebswellen-Drehmoment 19 bzw. M an der Abtriebswelle 7 dargestellt. Strichpunktiert in Figur 2 eingezeichnet ist die tatsächliche Winkellage 20 bzw.ϕ der Abtriebswelle 7, die aufgrund einer starken Spreizung der Gradeinteilung der Ordinate in Figur 2 sehr steil verläuft.

Bei t ≈ 50 ms schneidet die Winkellage 20 die 0°-Position, d. h. die Ruhelage 5 der Abtriebswelle 7. Ausgehend von der Ruhelage 5 steigt der Absolutwert des Drehmoments rasch mit der Zeit und zunehmenden Drehwinkel der Abtriebswelle 7 an, bis die dem Drehmoment entsprechende Kraft ausreicht, um die Haftreibung des Wischerkörpers 3 auf der Scheibe 2 zu überwinden und diesen zum Gleiten zu bringen. Ist dieses sogenannte Anfahrmoment überwunden, gleitet der Wischerkörper 3, da die Gleitreibung kleiner ist als die Haftreibung, unterstützt von der Anströmkraft des Fahrtwindes und daher mit abnehmenden Drehmoment an der Abtriebswelle 7 bis hin zur oberen Umkehrlage 6, die bei t ≈ 140 ms erreicht wird. Von dort wird der Wischerkörper 3 in umgekehrter Richtung gegen die Anströmkraft des Fahrtwindes wieder beschleunigt, wobei auch hier zunächst die Haftreibung überwunden werden muß. Hierdurch ergibt sich an der Abtriebswelle 7 ein Drehmomentverlauf, der durch ein noch höheres absolutes Anfahrtsmoment und eine bis zum erneuten Erreichen der Ruhelage 5 bei t ≈ 240 ms wieder abnehmende Drehmomentbelastung geprägt ist.

Der in Figur 3 näher im Detail gezeigte Reluktanzmotor 11 weist eine Drehmomentcharakteristik auf, die den im Zusammenhang mit Figur 2 erläuterten Drehmomentanforderungen angepaßt ist. Der Reluktanzmotor 11 weist den als Hohlwelle ausgebildeten Stator 21 auf, der fest mit dem Rahmen des Kraftfahrzeugs verbunden ist. Der Stator 21 weist insgesamt vierundzwanzig nach innen weisende kranzförmig angeordnete Pole auf. Diese Pole sind von Polwicklungen 22 umgeben, von denen in Figur 3 einige beispielhaft eingezeichnet sind. Die Polwicklungen 22 sind an die Versorgungsleitung 14 (vgl. Figur 1) angeschlossen. Dieser Anschluß ist dabei derart ausgeführt, daß die Pole des Stators 21 in vorgegebenen Phasen (Polgruppen nicht benachbarter Pole), die zur Veranschaulichung in Figur 3 mit Hilfe einer den Reluktanzmotor 11 in Sektorausschnitte aufteilenden, durchgezogenen Linie hervorgehoben sind, mit entsprechend geformtem Strom beaufschlagt werden können. Im Beispiel der Figur 3 bilden jeweils acht Pole des Stators 21 eine derartige Phase (Polgruppe).

Bei entsprechender Bestromung der Phasen ergibt sich ein Drehmomentverlauf des Reluktanzmotors 11, der nachfolgend noch beschrieben wird.

Koaxial im Stator 21 angeordnet ist der als Hohlwellenläufer ausgebildete Rotor 23 des Reluktanzmotors 11, der zwanzig nach außen, also in Richtung des Stators 21, weisende, kranzförmig angeordnete Pole aufweist. Zwischen dem Stator 21 und dem Rotor 23 verleibt nur ein kleiner Spalt als Zwischenraum. In axialer Richtung sind der Stator 21 und der Rotor 23 kurz ausgeführt, so daß das vom Reluktanzmotor 11 beanspruchte Volumen klein ist.

Aus Figur 3 wird ersichtlich, daß, verglichen mit dem Außendurchmesser des Stators 21, der Unterschied zwischen dem Innendurchmesser des Rotors 23 und dem Außendurchmesser des Stators 21 klein ist.

Der Stator 21 sowie der Rotor 23 sind als Blechpakete ausgeführt.

Der die Drehposition des Rotors 23 im Stator 21 erfassende Positionssensor 13 kann beispielsweise als zum Rotor 23 und zum Stator 21 koaxial angeordneter segmentweise magnetisierbarer Sensorring ausgeführt sein, der bevorzugt rotorfest (oder statorfest) gelagert ist, wobei am Gegenstück des Reluktanzmotors 11 zum Sensorring, beim rotorfesten Sensorring am Stator (bzw. beim statorfesten Sensorring am Rotor) die magnetisierbaren Sensorelemente zur Erfassung von Drehwinkel und ggf. auch Drehrichtung des Sensorrings angeordnet sind.

Fest mit dem Rotor 23 verbunden, z. B. auf diesen aufgeschrumpft, ist das Getriebe 9.

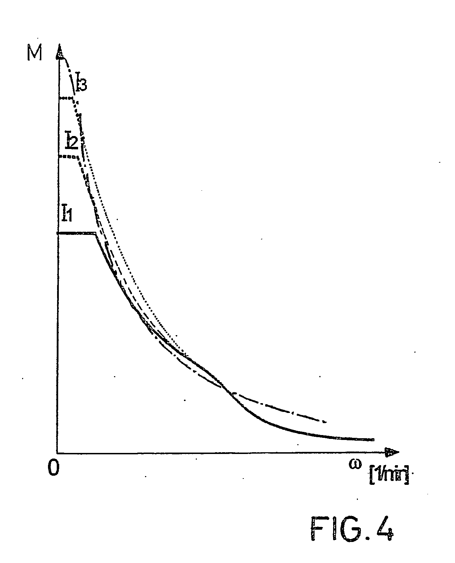

Figur 4 zeigt stationäre Motorkennlinien des Reluktanzmotors 11 in einem M/ω-Diagramm. Dargestellt ist der Mittelwert des Drehmomentes M über die Winkelgeschwindigkeit ω des Reluktanzmotors 11 bei verschiedenen Strömen I₁, I₂, I₃ durch die Polwicklungen 22, wobei I₁ <I₂ < I₃. Der Strom beim Anfahren des Reluktanzmotors 11 wird durch dessen maximale thermische Belastbarkeit begrenzt. Ein hoher Strom, wie z. B. I₃, kann daher nur während eines kürzeren Zeitraums durch die Polwicklungen 22 fließen als ein niedrigerer Strom, wie z. B. I₁. Insgesamt ähnelt die sich aus den Drehmoment-Kennlinien zu den Strömen I₁, I₂, I₃ ergebenden Charakteristik des Reluktanzmotors 11 einer Reihenschlußcharakteristik. Dies ist veranschaulicht durch die in Figur 4 strichpunktiert eingezeichnete Drehmoment-Kennlinie eines Universalmotors, d. h. eines Reihenschlußmotors, der z. B. in der Haushaltstechnik oder im Werkzeugbereich eingesetzt wird.

Die Charakteristik des Reluktanzmotors 11, kurzzeitig mit Hilfe eines entsprechend hohen Stroms ein hohes Anfahrmoment liefern zu können, wird zur Erfüllung der Drehmomentanforderungen der Scheibenwischervorrichtung 1 ausgenützt, wie nachfolgend noch gezeigt wird.

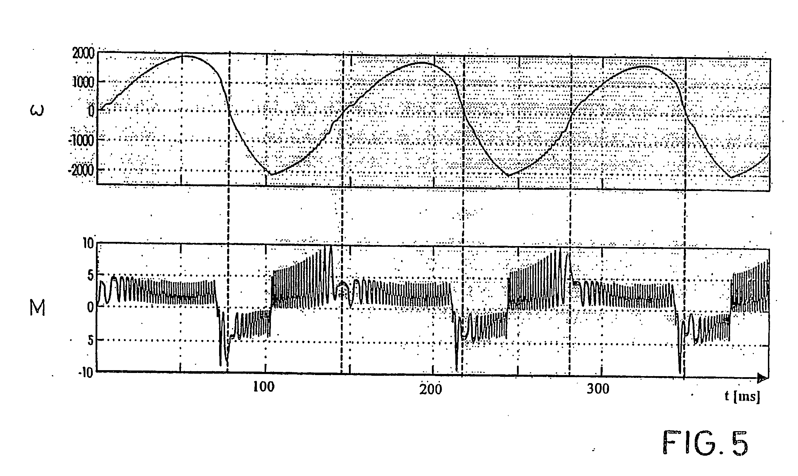

Figur 5 verdeutlicht die zeitlichen Verläufe der Drehzahl ω (Fig. 5 oben) sowie des Drehmoments M (Figur 5b) eines Reluktanzmotors, bei dem nur Polwicklungen einer Stator-Polgruppe einer Phase (eines Strangs) mit Strom beaufschlagt sind. Figur 5 dient hierbei der Illustration typischer Verhältnisse bei Reluktanzmotoren, wobei zu beachten ist, daß der durch die Verläufe gemäß Figur 5 charakterisierte Reluktanzmotor nicht an einen Betrieb in der Scheibenwischervorrichtung 1 angepaßt ist.

Aus Figur 5 wird deutlich, daß der Reluktanzmotor in kurzer Zeit auf hohe Drehzahlen beschleunigen kann und daher für Scheibenwischerantriebe geforderte Wischzyklenzeiten erreichen kann.

Der Reluktanzmotor mit der Charakteristik gemäß Figur 5 ist so geregelt, daß er nach etwa 75 ms seine Drehrichtung umkehrt. Deutlich wird (vgl. das M/t-Diagramm in Figur 5) die Drehmomentwelligkeit dieses nur einen strombeaufschlagten Strang aufweisenden Reluktanzmotors. Diese Drehmomentwelligkeit kann folgendermaßen ausgenutzt werden: Durch die überlagerte Bestromung mehrerer Stränge kann eine relativ geringe Reluktanzmotor-Drehmomentwelligkeit erzeugt werden, indem die Stränge so aufeinander geregelt werden, daß stets Minima des Drehmoments eines - Strangs des Reluktanzmotors mit Maxima des Drehmoments eines anderen Strangs des Reluktanzmotors zeitlich (z. B. nach Winkel und Zeit) abgestimmt werden.

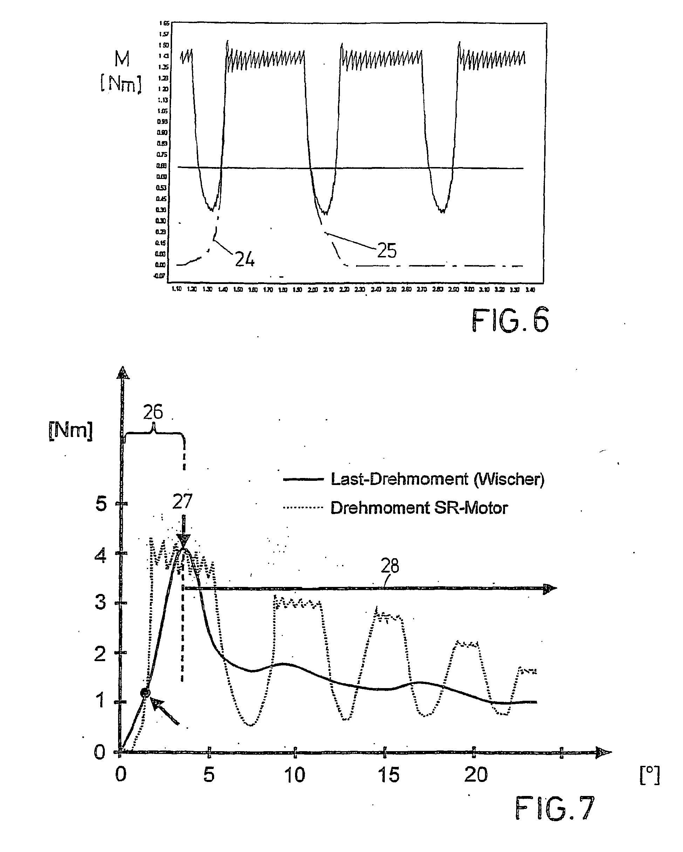

Ferner ist die Erzeugung einer definierten Drehmomentwelligkeit möglich, die insbesondere beim Anfahren der Wischerkörper 3, 4 aus der Ruhelage 5 oder der oberen Umkehrlage 6 das Anfahrmoment des Reluktanzmotors weiter steigert und somit zur sicheren Überwindung der Haftreibung der Wischerkörper 3, 4 an der Scheibe 2 führt. Dieses Prinzip wird nachfolgend anhand der Figuren 6 und 7 näher erläutert.

Figur 6 zeigt das Drehmoment eines zu dem von Figur 3 ähnlichen Reluktanzmotors 11 als Funktion der Winkellage (Drehposition) des Rotors 23. Der Reluktanzmotor 11 befindet sich hierbei im stationären Betrieb. Strichpunktiert sind zudem die Drehmomentverläufe beim Anfahren (Bezugszeichen 24) und beim Abschalten (Bezugszeichen 25) des Reluktanzmotors 11 eingetragen.

Figur 7 zeigt den dynamischen Fall des Anfahrens eines zu den Reluktanzmotoren der Figuren 3 und 6 ähnlichen Reluktanzmotors 11, aufgetragen über die Drehposition des Rotors 23. Punktiert in Figur 7 eingezeichnet ist der Drehmomentverlauf des Reluktanzmotors 11. Als durchgezogene Linie ist in Figur 7 der Last-Drehmomentverlauf an der Abtriebswelle 7 des Wischerkörpers 3 dargestellt.

Mit Hilfe des Positionssignals vom Positionssensor 13 ist der Rotor 23 beim Anfahren der Scheibenwischervorrichtung 1 so im Stator 21 positioniert, daß das Drehmoment des Reluktanzmotors 11 unmittelbar nach dem Anfahren schnell ansteigt. In einem ersten Zeitraum (vgl. Bezugszeichen 26 in Figur 7) dreht sich der Rotor 23 des Reluktanzmotors 11, während der Wischerkörper 3 noch an der Scheibe 2 haftet. In diesem Zeitraum 26 findet eine elastische Verformung statt, an der neben dem Wischerkörper 3 auch die Abtriebswelle 7 sowie das Getriebe 9 und das mechanische Verbindungselement 10 beteiligt sein können.

Ab einem Rotordrehwinkel von ca. 1,5 ° (vgl. Pfeil in Fig. 7) liegt das Drehmoment des Reluktanzmotors 11 oberhalb des Last-Drehmoments an der Abtriebswelle 7. Der Rotor 23 kann in der Folge beschleunigen und dynamische kinetische Energie aufnehmen. Diese bis zum Übergang des Wischerkörpers 3 von der haftenden Position in die Gleitbewegung bei einem Rotorwinkel von ca. 3,5° (vgl. Bezugszeichen 27) aufgenommene dynamische Energie reicht, obwohl das Last-Drehmoment-Maximum an der Abtriebswelle 7 an dieser Winkelposition höher ist als das Drehmoment des Reluktanzmotors 11, aus, um den Wischerkörper 3 in Bewegung zu versetzen.

Bei diesem Anfahren der Scheibenwischervorrichtung 1 wird zunächst durch die Ansteuereinrichtung 17 ein relativ hoher Strom durch die Polwicklungen 22 durch Freigabe der Stromquelle 15 über die Steuerleitung 16 vorgegeben. Hierbei sind die leistungselektronischen Bauteile der Ansteuereinrichtung 17 derart ausgelegt, daß ihre thermische Kapazität ausreicht, während der kurzzeitigen Lastspitze beim Anfahren den Anfahrstrom liefern zu können, ohne hierbei zu stark belastet zu werden. Die Ansteuereinrichtung 17 ist daher als Strombegrenzer ausgeführt und versorgt die Polwicklungen 22 abhängig von der Drehmomentaufnahme durch den Wischerkörper 3 mit variablem Strom.

Bei der beschriebenen Ausführung der Scheibenwischervorrichtung 1 wird der Strom durch die Polwicklungen 22 nach einem zweistufigen Verfahren mit Hilfe eines Softwareprogramms einstellbar derart begrenzt, daß das Zeitintegral des quadrierten Polwicklungsstroms über einen vorgegebenen Zeitraum T kleiner ist als ein vorgegebener Strom-Grenzwert I_{g}. Für jede der Stufen wird ein Zeitraum T sowie ein Strom-Grenzwert I_{g} vorgegeben. Alternativ kann auch eine höhere Anzahl von Stufen im Rahmen der Strombegrenzung eingesetzt werden. Ferner läßt sich als weitere Variante auch eine quasi kontinuierlich variable Strombegrenzung realisieren. Die hierbei die Strombegrenzung beeinflussenden Faktoren können wiederum softwaregesteuert von verschiedenen Faktoren, wie z.. B. der Außentemperatur, der Komponententemperatur der Wischerkörper 3, 4, oder auch der Anzahl der Versuche, einen z. B. durch Vereisung blockierten Wischerkörper 3, 4 in Bewegung zu setzen, abhängig gemacht werden. Derartige Steuerungsparameter können z.B. vom Positionssensor 13 über die Datenleitung 18 an die Ansteuereinrichtung 17 zur Vorgabe eines entsprechend begrenzten Stroms übermittelt werden.

In einem sich an den Zeitraum 26 der elastischen Verformung anschließenden Zeitraum (vgl. Pfeil 28 in Figur 7) gleitet der Wischerkörper 3 und wird mit Hilfe des Reluktanzmotors 11 beschleunigt. Nach Eintritt in die Gleitbewegung fällt das Last-Drehmoment des Wischerkörpers 3 schnell ab und schwingt sich auf einen für die Gleitreibung charakteristischen Wert ein. Während des Zeitraums 28 wird mittels der Strombegrenzungsfunktion der Ansteuereinrichtung 17 der Strom durch die Polwicklungen 22 reduziert, so daß sich das vom Reluktanzmotor 11 maximal erreichte Drehmoment kontinuierlich reduziert. Da der Wischerkörper im Zeitraum 28 gleitet, reicht auch dieses reduziertes Drehmoment zur sicheren Bewegung der Wischerkörpers 3 über die Scheibe 2 aus.

Durch Variation der Polzahl des Stators 21 und/oder des Rotors 23, durch Einstellen der Anfahrposition des Rotors 23 im Stator 21 sowie durch Anpassung der Elastizitäten des mechanischen Verbindungselementes 10, des Getriebes 9, der Abtriebswellen 7, 8 und der Wischerkörper 3, 4 läßt sich der Drehmomentverlauf des Reluktanzmotors 11 an spezifische Drehmomentanforderungen der Scheibenwischervorrichtung 1 anpassen.

Die Ansteuereinrichtung 17 ist so ausgelegt, daß auch während des Anfahrens des Reluktanzmotors 11 andere Verbraucher am Bordnetz des Kraftfahrzeugs in ihrer Funktion nicht beeinträchtigt werden.

## Patentansprüche

1. Scheibenwischerantrieb mit einem stationären Antriebsteil und einem angetriebenen Antriebsteil, welches mit einem Wischerkörper in Wirkverbindung steht,
- mit einem Reluktanzmotor (11), wobei das stationäre Antriebsteil durch den Stator (21) des Reluktanzmotors (11) und das angetriebene Antriebsteil durch den Rotor (23) des Reluktanzmotors gebildet ist,
- mit einer Stromquelle (15) mit einer Ansteuereinrichtung (17), durch welche der Stator (21) abhängig von der Drehmomentaufnahme durch den Wischerkörper (3, 4) mit einem variablen Strom versorgt wird,
- wobei die Ansteuereinrichtung (17) als Strombegrenzer ausgeführt ist, **dadurch gekennzeichnet, dass** der Statorstrom derart begrenzt wird, daß das Zeitintegral des quadrierten Statorstroms über einen vorgegebenen Zeitraum (T) kleiner ist als ein vorgegebener Strom-Grenzwert (I_{g}).

2. Scheibenwischerantrieb nach Anspruch 1, **dadurch gekennzeichnet, daß** der Rotor (23) als Hohlwelle ausgeführt ist, welche über ein mechanisches Verbindungselement (7, 9, 10), vorzugsweise ein Getriebe (9), insbesondere mit einer Untersetzung zwischen 10 und 20, mit dem Wischerkörper (3) verbunden ist.

3. Scheibenwischerantrieb nach Anspruch 1 oder 2, **gekennzeichnet durch** eine programmierbare Ansteuereinrichtung (17).

4. Scheibenwischerantrieb nach einem der vorhergehenden Ansprüche, **gekennzeichnet durch** einen Lagesensor (13) zur Ermittlung der Drehposition des Rotors (23) im Stator (21).

5. Scheibenwischerantrieb nach Anspruch 4, **dadurch gekennzeichnet, daß** der Lagesensor (13) als Hohlwellen-Lagesensor ausgeführt ist.

6. Scheibenwischerantrieb nach einem der vorhergehenden Ansprüche, **dadurch gekennzeichnet, daß** der Rotor (23) und der Stator (21) eine kranzförmige Polanordnung mit einer hohen Anzahl von Polen, insbesondere mehr als zehn Polen, aufweisen.

7. Scheibenwischerantrieb nach einem der vorhergehenden Ansprüche, **dadurch gekennzeichnet, daß** Rotor (23) und Stator (21) so ausgeführt sind, daß der Unterschied zwischen dem Innendurchmesser des Rotors (23) und dem Außendurchmessers des Stators (21) klein ist verglichen mit dem Außendurchmesser des Stators (21).

8. Scheibenwischervorrichtung, **gekennzeichnet durch** einen Scheibenwischerantrieb nach einem der vorhergehenden Ansprüche.

## Claims

1. Windscreen wiper drive comprising a stationary drive part and a driven drive part, which is operatively connected to a wiper body,
- having a reluctance motor (11), with the stationary drive part being formed by the stator (21) of the reluctance motor (11) and the driven drive part being formed by the rotor (23) of the reluctance motor,
- having a power source (15) with an actuating device (17), which power source supplies a variable current to the stator (21) as a function of the torque take-up by the wiper body (3, 4),
- with the actuating device (17) being designed as a current-limiting means,
**characterized in that** the stator current is limited in such a way that the time integral of the square of the stator current over a prespecified time period (T) is less than a prespecified current limit value (I_{g}).

2. Windscreen wiper drive according to Claim 1, **characterized in that** the rotor (23) is designed as a hollow shaft which is connected to the wiper body (3) by means of a mechanical connecting element (7, 9, 10), preferably a gear mechanism (9), in particular with a step-down of between 10 and 20.

3. Windscreen wiper drive according to Claim 1 or 2, **characterized by** a programmable actuating device (17).

4. Windscreen wiper drive according to one of the preceding claims, **characterized by** a position sensor (13) for ascertaining the rotation position of the rotor (23) in the stator (21).

5. Windscreen wiper drive according to Claim 4, **characterized in that** the position sensor (13) is designed as a hollow-shaft position sensor.

6. Windscreen wiper drive according to one of the preceding claims, **characterized in that** the rotor (23) and the stator (21) have a crown-like pole arrangement with a large number of poles, in particular more than ten poles.

7. Windscreen wiper drive according to one of the preceding claims, **characterized in that** the rotor (23) and the stator (21) are designed such that the difference between the inside diameter of the rotor (23) and the outside diameter of the stator (21) is small compared to the outside diameter of the stator (21).

8. Windscreen wiper apparatus **characterized by** a windscreen wiper drive according to one of the preceding claims.

## Revendications

1. °) Entraînement d'essuie-glace comportant une partie fixe d'entraînement et une partie mobile d'entraînement, celle-ci coopérant avec un organe d'essuyage, comprenant :
- un moteur à réluctance (11), la partie fixe d'entraînement étant formée par le stator (21) du moteur à réluctance (11) et la partie mobile d'entraînement étant formée par le rotor (23) du moteur à réluctance,
- une source de courant (15) avec une installation de commande (17) qui alimente le stator (21) avec un courant d'intensité variable en fonction du couple demandé par l'organe d'essuyage (3, 4),
- l'installation de commande (17) étant réalisée comme limiteur de courant,
**caractérisé en ce qu'**
on limite le courant du stator pour que l'intervalle en fonction du temps du carré du courant du stator sur une période donnée (T) soit inférieur à un seuil de courant prédéterminé (I_{g}).

2. °) Entraînement d'essuie-glace selon la revendication 1,
**caractérisé en ce que**
le rotor (23) est un arbre creux relié par un élément de liaison mécanique (7, 9, 10), de préférence une transmission (9), notamment avec une réduction comprise entre 10 et 20, à l'organe d'essuyage (3).

3. °) Entraînement d'essuie-glace selon la revendication 1 ou 2,
**caractérisé par**
une installation de commande programmable (17).

4. °) Entraînement d'essuie-glace selon l'une des revendications précédentes,
**caractérisé par**
un capteur de position (13) pour déterminer la position de rotation du rotor (23) dans le stator (21).

5. °) Entraînement d'essuie-glace selon la revendication 4,
**caractérisé en ce que**
le capteur de position (13) est réalisé comme capteur de position d'arbre creux.

6. °) Entraînement d'essuie-glace selon l'une des revendications précédentes,
**caractérisé en ce que**
le rotor (23) et le stator (21) ont une disposition de pôles en forme de couronne, avec un grand nombre de pôles, notamment plus de dix pôles.

7. °) Entraînement d'essuie-glace selon l'une des revendications précédentes,
**caractérisé en ce que**
le rotor (23) et le stator (21) sont réalisés pour que la différence entre le diamètre intérieur du rotor (23) et le diamètre extérieur du stator (21) soit faible par comparaison avec le diamètre extérieur du stator (21).

8. °) Dispositif d'essuie-glace
**caractérisé par**
un entraînement d'essuie-glace selon l'une des revendications précédentes.
